# EUROPEAN PATENT SPECIFICATION

(11) **EP 2 155 823 B1**
(45) Date of publication and mention of the grant of the patent: **05.06.2013**
(21) Application number: 08756752.5
(22) Date of filing: 06.06.2008
(51) Int. Cl.: C08K 3/04, C08K 3/22, C08L 83/08, C08K 3/00, C08K 3/26

(54) **FLUOROSILICONE ELASTOMERS FOR HIGH TEMPERATURE PERFORMANCE**
BEI HOCHTEMPERATUR LEISTUNGSFÄHIGE FLUORSILIKON-ELASTOMERE
ÉLASTOMÈRES DE FLUOROSILICONE POUR PERFORMANCE AMÉLIORÉE À HAUTE TEMPÉRATURE

(30) Priority: 08.06.2007 US 933921 P; 20.03.2008 US 38120
(43) Date of publication of application: 24.02.2010
(73) Proprietor: Dow Corning Corporation, Midland, Michigan 48686-0994 (US)
(72) Inventor: CHORVATH, Igor, Midland, MI 48642 (US); DEGROOT, JR., Jon, Vierling, Midland, MI 48642 (US); DIPINO, Michael, North Branford, CT 06471 (US); DRAKE, Robert, Andrew, Penarth CF64 5BR (GB); LAWSON, David, W., Cardiff CF14 7AD (GB); ROBSON, Steven, Cowbridge, Vale Of Glamorgan CF71 7NQ (GB); SHAWL, David, Bay City, MI 48760 (US); TONGE, Lauren, Marie, Sanford, MI 48657 (US)
(74) Representative: Donlan, Andrew Michael
(86) International application number: PCT/US2008/066001
(87) International publication number: WO 2008/154319

(56) References cited:
- EP-A- 1 024 164
- WO-A-2006/007268

## Description

### Cross Reference to Related Applications

This application claims priority to U.S. Application No. 60/933921, as filed on 8 June, 2007, and U.S. Application No. 61/038120 as filed on 20 March, 2008.

### Technical Field

This disclosure relates to fluorosilicone elastomer base compositions containing a stabilizer that provide cured fluorosilicone elastomers having improved high temperature performance. The stabilizer comprises carbon black, calcium carbonate, iron oxide, and optionally zinc oxide. The stabilizer is particularly useful to prepare cured fluorosilicone elastomers for o-rings, connectors, and constructing automotive hoses.

### Background

Automotive applications utilizing fluorosilicone rubber arc constantly challenged to demonstrate performance improvements. Technology trends result in demands for ever increasing resistance to both heat and chemical exposure. For example, Western Europe continues to exhibit significant growth in turbo diesel passenger cars, at the expense of their gasoline equivalents. In the U.S., a similar growth has been experienced in the small truck market. The service temperatures of the hoses, especially turbo diesel engine hoses, are thus increasing. Likewise, improvements in fuel and oil resistance are sought. Typically, the hoses used in automotive applications have a multilayer structure consisting of fabric reinforcement encapsulated with silicone rubber (classified as VMQ elastomer by the American Society of Test Methods (ASTM)) and lined internally with a layer of fluoroelastomer (FVMQ). Generally, the heat stability of fluorosilicone elastomers (FVMQ) is less than silicone elastomers (that is non-fluoro containing silicone elastomer or rubber such as VMQ).

There is a need to improve the heat stability of the fluorosilicone elastomers used in automotive applications, and in particular for their use in o-rings, connectors, and in the construction of hoses. While heat stabilizers, such as cerium hydrate or hydroxides, are known to provide thermal resistance, to such silicone elastomer formulations, there is a need to improve thermal resistance to even higher temperatures. Furthermore, there is a need to improve such fluorosilicone elastomers' resistance to oil at operating automotive temperatures. Both improvements are sought while maintaining certain performance criteria, such as tensile strength and elongation, of the fluorosilicone elastomer.

The present inventors have discovered a stabilizer composition, that when added to silicone elastomer base compositions, provide improved heat aging properties to the cured silicone elastomer vs similar silicone elastomers using conventional heat stabilizer components. When the silicone elastomer is a fluorosilicone elastomer base, the stabilizer composition provides improved heat aging and oil resistance of the cured fluorosilicone elastomer. The improved fluorosilicone elastomers are particularly useful in various automotive applications, such as o-rings, connectors, or an inner liner for silicone rubber based turbocharger hoses.

### Summary

This disclosure relates to a curable fluorosilicone elastomer composition comprising:
A) 70 - 95 weight % of a fluorosilicone elastomer base.
B) 1.5 - 40 weight % of a stabilizer comprising;
   B¹) carbon black,
   B²) calcium carbonate,
   B³) iron oxide,
   B⁴) optionally zinc oxide,
   wherein the amount of parts by weight of components B¹, B², B³, and optionally B⁴ used in 100 parts by weight of the stabilizer may vary from 2 to 50 parts, and
C) 0.1 - 3 wt% of a cure agent,
with the proviso the wt % of components A), B), and C) sum to 100 wt %.

In one embodiment, the fluorosilicone elastomer base comprises;
A¹) a perfluoroalkyl polydiorganopolysiloxane,
A²) a reinforcing filler,
A³) an optional non fluorinated polydiorganopolysiloxane
A⁴) cerium hydroxide or cerium hydrate, and
A⁵) an optional adhesion promoter.

This disclosure also relates to the cured fluorosilicone elastomer compositions, process for their preparation, and articles of manufacture prepared from the cured fluorosilicone elastomers.

This disclosure further relates a process for improving the thermal stability of cured fluorosi licone elastomers.

### Detailed Description

### The fluorosilicone elastomer base

Component A) in the present disclosure is a fluorosilicone elastomer base. As used herein, a "fluorosilicone elastomer base" is a silicone composition when subsequently cured or vulcanized, provides a fluorosilicone elastomer or rubber. Silicone refers to organopolysiloxanes containing siloxane units independently selected from (R₃SiO_{0.5}), (R₂SiO), (RSiO_{1.5}), or (SiO₂) siloxy units, where R may be any monovalent organic group. These siloxy units can be combined in various manners to form cyclic, linear, or branched structures. Fluorosilicone as used herein refers to an organopolysiloxane wherein at least one R substituent contains a fluorine atom, for example such as a perfluoroalkyl group designated as R^{f}.

In one embodiment, component A) may be a fluorosilicone elastomer base comprising;
A¹) a perfluoroalkyl polydiorganopolysiloxane,
A²) a reinforcing filler,
A³) an optional non fluorinated polydiorganopolysiloxane,
A⁴) cerium hydroxide or cerium hydrate, and
A⁵) an optional adhesion promoter.
each of which are described in more detail below.

Fluorosilicone elastomer bases are known in the art and comprise a perfluoroalkyl polydiorganosiloxane (A¹), a reinforcing filler (A²), and optionally a non-fluorinate polydioroganosiloxane (A³). Typically, at least 90 mole percent of the perfluoroalkyl-containing polydiorganosiloxane repeating units in A¹ are described by formula R^{f}CH₂CH₂(CH₃)SiO_{2/2}, and up to 10 mole percent of the repeating units are described by formula R¹₂SiO, R^{f} is a perfluoroalkyl group containing 1 to 10 carbon atoms, and each R¹ is independently selected from methyl, phenyl and vinyl. The perfluoroalkyl group is typically CF₃, C₂F₅, C₃F₇, C₄F₉, C₇F₁₅ and C₁₀F₂₁. The endblocking groups of the perfluoroalkyl-containing polydiorganosiloxane are hydroxyl or triorganosilyl, e.g., trimethylsilyl or dimethylvinylsilyl. The choice of repeating units and/or endblocking groups is determined by the desired curing reaction to convert the fluorosilicone elastomer base to a cured fluorosilicone elastomer. For example, when the elastomer base is cured by an organohydrogensiloxane-addition reaction catalyst combination or by a vinyl specific peroxide, the endblocking groups or the polydiorganosiloxane repeating units will contain alkenyl radicals such as vinyl groups. The perfluoroalkyl-containing polydiorganosiloxane typically has a viscosity of 1000 Pa·s or above for a liquid fluorosilicone elastomer base and, alternatively, greater than 10,000 Pa·s, so that it has a gum-like consistency for high consistency fluorosilicone elastomer bases. Perfluoroalkyl-containing polydiorganosiloxanes useful in the present method and composition are commercially available. One perfluoroalkyl-containing polydiorganosiloxane useful in our invention is described in US 3,179,619. Another method of making these polydiorganosiloxanes is disclosed in US 3,002,951. The latter U.S. Patent teaches a method of preparing from cyclic siloxane trimers, an high molecular weight perfluoroalkyl-containing polydiorganosiloxane having perfluoroalkyl radicals bonded to silicon atoms. The cyclic siloxane trimers used in this latter U.S. Patent are shown in US 2,979, 519. Other methods of making perfluoroalkyl-containing polydiorganosiloxanes are revealed in US 3,274,153; US 3,294,740 and US 3,373,138.

The perfluoroalkyl-containing polydiorganosiloxane may be a single type of homopolymer or copolymer or it may be a mixture of various homopolymers, copolymers or homopolymers and copolymers. Typically, the perfluoroalkyl-containing polydiorganosiloxane is an hydroxyl-endblocked or vinyl-endblocked polymethyl-(3,3,3-tritluoropropyl)siloxane, wherein at least 99 mol percent of the repeating units are methyl-3,3,3-trifluoropropylsiloxy.

The amount of the perfluoroalkyl polydiorganopolysiloxane used in the curable fluorosilicone elastomer composition may vary, but typically ranges from 50 to 95, alternatively 60 to 90, alternatively 70 to 85, weight percent of the composition.

The reinforcing fillers of the fluorosilicone elastomer base arc typically a silica. Many forms of silica are commercially available such as fumed silica, precipitated silica, silica aerogel and silica xerogel. Typically, the reinforcing silica filler has a surface area of at least 100 m²/g and, alternatively, at least 200 m²/g. The reinforcing silica filler may be added in any quantity which provides the desired reinforcement without adversely affecting other properties of the elastomer. Generally, quantities of 5-100 parts of reinforcing silica filler per 100 parts of perfluoroalkyl-containing polydiorganosiloxane are useful. Thus, the curable fluorosilicone elastomer composition, may contain 2.5 - 47.5 weight percent of the reinforcing filler.

Typically the reinforcing silica filler is treated with an anticrepe agent. This agent may be added to treat the reinforcing silica filler before it is added to the perfluoroalkyl-containing polydiorganosiloxane, or it may be added (in situ) to treat the reinforcing silica filler while the perfluoroalkyl-containing polydiorganosiloxane is being mixed with the reinforcing silica filler. Examples of anticrepe agents include the following and their mixtures: silanes, e.g., trimethylchlorosilane, dimethyldichlorosilane, methyltrichlorosilane, methyltrimethoxysilane and 3,3,3-trifluoropropyltrimethoxysilane; silazanes, e.g., tetramethyldivinyldisilazane, hexamethyldisilazone, and tetramethydi(3,3,3-trifluoropropyl)disilazane; cyclic siloxanes, e.g., cyclic diorganosiloxanes; and low molecular weight polydiorganosiloxanes, e.g., hydroxyl-endblocked polydimethylsiloxane, hydroxyl-endblocked polymethylvinylsiloxane, hydroxyl-endblocked polymethyl(3,3,3-trifluoropropyl)siloxane and copolymers of these silanes, silazanes or siloxanes. The preferred anticrepe agents are low molecular weight polydiorganosiloxanes and silazanes. The anticrepe agents may be added in any quantity which will reduce crepe hardening and will not adversely affect the properties of the elastomer. Typical quantities are in a range of 0.1 to 15 weight percent of the fluorosilicone elastomer base.

Component A³) is an optional non-fluorinated polydiorganopolysiloxane. Typically, the optional non-fluorinated polydiorganosiloxane is a polydiorganosiloxane gum or polymer wherein at least 50 percent of the total organic substituents bonded to silicon atoms are methyl groups. Other organic substituents in the polydiorganosiloxane may be vinyl or phenyl groups. When present, the vinyl groups should comprise no more than 2.5 percent of the total number of silicon-bonded substituents. Examples of component (A³) may include; a dimethylvinylsiloxy-terminated dimethylpolysiloxane, a dimethylvinylsiloxy-terminated copolymer of methylvinylsiloxane and dimethylsiloxane, a silanol-terminated copolymer of methylvinylsiloxane and dimethylsiloxane, a dimethylvinylsiloxy-terminated copolymer of methylphenylsiloxane and dimethylsiloxane, a dimethylvinylsiloxy-terminated copolymer of methylphenylsiloxane, methylvinylsiloxane, and dimethylsiloxane, a dimethylvinylsiloxy-terminated copolymer of diphenylsiloxane and dimethylsiloxane, a dimethylvinylsiloxy-terminated copolymer of diphenylsiloxane, methylvinylsiloxane, and dimethylsiloxane,

The choice of polydiorganosiloxane gum or polymer is determined by the fluorosilicone elastomer base consistency. Typically polydiorganosiloxane polymers are added to liquid forms of the fluorosilicone elastomer bases whereas high consistency fluorosilicone base forms can utilize both polydiorganosilozane gums or polymers. Typically, the polydiorganosiloxane gum have a plasticity of at least 100 mm/100 as measured by the Williams plastimeter, alternatively the gums have a plasticity within the range from 125 to 185 mm/100.

Component A⁴) is cerium hydroxide or cerium hydrate. The addition of cerium hydroxide or hydrate to silicone elastomer compositions for heat stabilization is known. However, such compositions have limited heat stability, typically to 200°C. The present stabilizer composition (component B) provides thermal stabilities typically in excess of 200°C when used in conjunction with conventional heat stabilizers such as cerium hydroxide or hydrate. Cerium hydroxide or hydrate useful as component A⁴ include those cerium compounds having the formula Ce(OH)₄.xH₂O [CAS registry number 12014-56-1].
The amount of cerium hydroxide or hydrate may vary, but typically ranges from 0.1 to 10 weight % of the silicone elastomer composition. To ensure the most uniform and optimum mixing, typically a "masterbatch" of the cerium hydroxide or hydrate component is prepared by mixing component A⁴ with a portion of the fluorosilicone base or non fluorinated polydiorganopolysiloxane (A¹ or A³) component. The masterbatched cerium hydroxide or hydrate component may then be added to the fluorosilicone elastomer composition. Such masterbatched compositions that are commercially available and useful in the present compositions include SILASTIC ® HT-1 Modifier (Dow Corning Corporation, Midland, MI).

Component A⁵) is an optional adhesion promoter. When used the adhesion promoter is added to the silicone composition to improve adhesion of the fluorosilicone elastomer to other rubber or elastomeric components in an article of manufacture, such as a hose assembly. Alternatively, the adhesion promoter may be added to another composition or component in a manufactured article. For example, in a multi-layered hose construction, the adhesion promoter may be added to the silicone rubber component, which is in contact with the disclosed cured fluorosilicone elastomer compositions. The adhesion promoter may be selected from a fluoro-modified organohydrogenpolysiloxane having the general formula

(Me₃SiO)(MeHSiO)ₓ(R^{f}CH₂CH₂(Me)SiO)_{y}(SiMe₃)

where x and y may vary from 1 to 200, alternatively, 5 to 100, or alternatively 10 to 50,
Me is methyl, and R^{f} is a perfluoroalkyl group containing 1 to 10 carbon atoms as defined above. Commercially available fluoro-modified organohydrogenpolysiloxanes suitable as component A⁵ include; SYL-OFF ® Q2-7560 Crosslinker, and SYL-OFF ® SL-7561 Crosslinker (Dow Corning Corporation, Midland, MI). The amount of the adhesion promoter in the composition may vary, but typically ranges from 0 to 10, alternatively 0.5 to 5 weight percent of the total.

The fluorosilicone elastomer base may also include extending fillers, such as titanium dioxide, quartz, magnesium oxide, graphite, glass fibers and glass microspheres. The fluorosilicone elastomer base may also include pigments, colorants, flame retardants, additional heat stability additives, additives to improve compression set and other additives commonly used in the rubber art.

Representative fluorosilicone elastomer bases useful in the present disclosure are taught in US 3,179,619; US 4,882,368; US 5,081,172 and US 5,171,773, which are herein incorporated by reference in their entirety.

Alternatively, preformed commercially available, fluorosilicone elastomer bases may be used. Representative, non-limiting examples of such fluorosilicone elastomer bases include; SILASTIC ® FL 40-9201, FL 30-9201, LS-2840, LS2380U, LS-2860, LS-2380, and LS5-2040 (Dow Corning Corporation, Midland, MI).

### The Stabilizer

Component B) in the present disclosure is a stabilizer composition. As used herein, "stabilizer" refers to a certain combination of components (B¹, B², B³, and optionally B⁴) added to a curable fluorosilicone elastomer composition for the purpose of improving either the heat stability or oil resistance of the subsequently cured fluorosilicone elastomer composition. The stabilizer component comprises;
B¹) carbon black,
B²) calcium carbonate,
B³) iron oxide, and
B⁴) optionally zinc oxide,
each of which are discussed in more detail below.

Component B¹ is carbon black. The type and source of carbon black may vary. Representative, non-limiting examples of the carbon black, useful as component (B¹) in the present invention can be found in summary articles of this class of materials such as in: Chemical Economics Handbook-SRI International 2005, Carbon Black 731.3000A. Typically, the carbon black is amorphous, having a carbon content of at least 98 %, an average particle size of 0.05 micrometers, a specific surface area of at least 44 m²/g. Representative, non-limiting examples of carbon black suitable as component B¹ in the present disclosure include; SUPERJET® Carbon Black (LB-1011) supplied by Elementis Pigments Inc., Fairview Heights, IL 62208; SR 511 supplied by Sid Richardson Carbon Co, 3560 W Market Street, Suite 420, Akron, OH 44333; and N330, N550, N762, N990 (Degussa Engineered Carbons, Parsippany, NJ 07054).

Component B²) is calcium carbonate. The type and source of calcium carbonate may vary. Representative, non-limiting examples of the calcium carbonate, useful as component (B²) in the present invention can be found in summary articles of this class of materials such as in: Chemical Economics Handbook-SRI International 2007, Calcium Carbonate 724.6000A. Typically, the calcium carbonate is greater than 99 % CaCO₃ and the mean particle size is 5 - 6 micrometers. Representative, non-limiting examples of calcium carbonate suitable as component B² in the present disclosure include; OMYA BLP® 3 (OMYA, Orgon France).

Component B³) is iron oxide. The type and source of iron oxide may vary. Representative, non-limiting examples of the iron oxide, useful as component (B³) in the present invention can be found in summary articles of this class of materials such as in: Chemical Economics Handbook-SRI International 2008, Inorganic Color Pigments 575.3000A. Typically, the iron oxide is a micronised powder containing at least 95 % Fe₂O₃ having an average particle size of 0.2 micrometers. Representative, non-limiting examples of iron oxide suitable as component B³ in the present disclosure include; Baryferrox® 130 BM (Lanxess Deutschland, GmbH, D-51369 Leverkusen, Germany)

Component B⁴) is zinc oxide. The type and source of zinc oxide may vary. Representative, non-limiting examples of the iron oxide, useful as component (B⁴) in the present invention can be found in summary articles of this class of materials such as in: Chemical Economics Handbook-SRI International 2007, Inorganic Zinc Chemicals 798.1000A. Typically, the zinc oxide is at least 99 % ZnO and having an average particle size of 0.1 micrometer, and an average surface area of 9.0 m²/g. Representative, non-limiting examples of zinc oxide suitable as component B⁴ in the present disclosure include;
Kaddox 911 (Horsehead Cop., Monaca PA 15061).

The amount of each component used in the stabilizer B) may vary as follows;
B¹) carbon bl ack, 2 to 50 parts,
   alternatively, 10 to 40 parts,
      alternatively, 25 to 40 parts,
         or alternatively 30 to 35 parts
B²) calcium carbonate, 2 to 50 parts,
   alternatively, 10 to 40 parts,
      alternatively, 25 to 40 parts,
         or alternatively 30 to 35 parts,
B³) iron oxide, 2 to 50 parts,
   alternatively, 10 to 40 parts,
      alternatively, 25 to 40 parts,
         or alternatively 30 to 35 parts,
B⁴) zinc oxide, 0 to 50 parts,
   alternatively, 1 to 40 parts,
      or alternatively 1 to 10 parts
wherein parts represent the amount of each component by weight B¹, B², B³, and B⁴ in 100 parts by weight of the stabilizer.

The amount of the stabilizer (that is the total weight of components R¹, B², B³, and B⁴) used in the curable fluorosilicone elastomer composition may vary from 1.5 - 40 wt %, alternatively from 5 to 30 wt %, or alternatively from 10 to 20 wt % of the total curable fluorosilicone elastomer composition.

The manner for how each component of the stabilizer is added and mixed in the curable fluorosilicone elastomer composition may vary. For example, a mixture of components B¹ - B³ and optionally B⁴ may be first made and admixed to the fluorosilicone elastomer base composition. Alternatively, each individual component may be added and mixed in any order directly into the curable fluorosilicone elastomer composition. To ensure the most uniform and optimum mixing, typically a "masterbatch" of each stabilizer component is prepared by adding the individual stabilizer component with a portion of the fluorosilicone base (A¹ or A³) component. The masterbatched stabilizer component may then be added to the fluorosilicone elastomer composition. The masterbatch technique is particularly useful for the addition of carbon black, iron oxide, and zinc oxide. The amount of the stabilizer required for a particular application is easily determined by one skilled in the rubber art based on the selection of the fluorosilicone rubber base (A), the selection of the stabilizer composition (B), the heat stability requirements and the process selected for preparing the cured fluorosilicone elastomer. The stabilizer composition may affect the processibility of the fluorosilicone elastomer base. However, techniques to overcome such factors affecting processibility for added components similar to the present stabilizers are well known. Such techniques include, varying concentration, particle shape, and the surface activity of such components in the silicone elastomer base.

### C) The cure agent

A curing agent is added to the fluorosilicone elastomer base containing the stabilizer to effect formation of a cured fluorosilicone elastomer. The preferred curing agents are organic peroxides which are well-known in the silicone art as curing agents. Specific examples of suitable peroxides which may be used according to the method of the present invention include: 2,5-dimethyl-2,5-di(tert-butylperoxy)hexane; benzoyl peroxide; dicumyl peroxide; t-butyl peroxy O-toluate; cyclic peroxyketal; t-butyl hydroperoxide; t-butyl peroxypivalate; lauroyl peroxide; t-amyl peroxy 2-ethylhexanoate; vinyltris(t-butyl peroxy)silane; di-t-butyl peroxide, 1,3-bis(t-butylperoxyisopropyl) benzene; di-(2,4 dichlorobenzoyl) peroxide; 2,2,4-trimethylpentyl-2-hydroperoxide; 2,5-bis(t-butylperoxy)-2,5-dimethylhexyne-3, t-butyl-peroxy-3,5,5-trimethylhexanoate; cumene hydroperoxide; t-butyl peroxybenzoate; and diisopropylbenzene mono hydroperoxide. The amount of organic peroxide is not critical. A useful amount is in a range of 0.1 to 3 weight percent of the fluorosilicone elastomer base containing the stabilizer.

The fluorosilicone elastomer base containing the stabilizer is also curable by other curing agents known in the art, for example, an organohydrogenpolysiloxane/addition reaction catalyst combination. The organohydrogenpolysiloxane of this combination must contain at least 2 silicon-bonded hydrogen atoms in each molecule. Examples of the organohydrogenpolysiloxane include ttirnethylsiloxy-terminated dimethylsiloxanemethylhydrogensiloxane copolymers, hydrocendimethylsiloxyterminated dimethylsiloxanemethylhydrogensiloxane copolymers and similar compounds. The molecular structure may be strai ght-chained, branched or cyclic and its degree of polymerization (DP) should be at least 2. Examples of the addition reaction catalyst include platinum and platinum compound catalysts, e.g., platinum black, chloroplatinic acid, platinum tetrachloride, chloroplatinic acid/olefin complexes, chloroplatinic acid/methylvinyisiloxane complexes and similar compounds; or a microparticulate thermoplastic catalyst which contains a platinum or platinum compound catalyst as described above; rhodium compounds and cobalt carbonyl.

In one embodiment the curable fluorosilicone elastomer composition contains;
A¹) 50 to 90 weight % of the perfluoroalkyl polydiorganopolysiloxane,
A²) 2.5 to 47.5 weight % of the reinforcing filler,
A³) 0.1 to 5 weight % of the non fluorinated polydiorganopolysiloxane,
A⁴) 0.1 to 10 weight % cerium hydroxide or cerium hydrate, and
B¹) 1 to 6, alternatively 2 to 5, alternatively 3 to 5 weight %,carbon black,
B²) 1 to 6 alternatively 2 to 5, alternatively 3 to 5 weight % calcium carbonate,
B³) 1 to 6 alternatively 2 to 5, alternatively 3 to 5 weight % iron oxide, and
C) 0.1 - 3 wt% of the cure agent,
with the proviso the wt % of all components sum to 100 wt %. Each of the components are described above. In a yet another embodiment, the curable fluorosilicone elastomer composition further comprises an adhesion promoter selected from a fluoro-modified organohydrogenpolysiloxane having the average formula

(Me₃SiO)(MeHSiO)ₓ(R^{f}CH₂CH₂(Me)SiO)_{y}(SiMe₃),

as described above.

The temperature range for curing the fluorosilicone elastomer base may be room temperature or above. A preferred temperature range is 50°C to 250°C. The temperature range should be sufficient to activate the catalyst used.

A cured fluorosilicone elastomer may be produced by mixing the fluorosilicone composition detailed above, forming the composition to a desired configuration, and vulcanizing to yield a cured fluorinated silicone elastomer.

The fluorinated silicone elastomeric composition may be formed to the desired configuration by suitable methods such as compression molding, injection molding, transfer molding, calendaring and extruding.

After forming to the desired configuration, the formed fluorosilicone elastomer is vulcanized, which effects curing of the composition. When the fluorosilicone elastomer composition contains organic peroxide vulcanizing agent, the composition is vulcanized by heating to a temperature sufficiently high to activate the organic peroxide catalyst. When molding, the temperature is typically from 100° C to 180°C for times of 15 minutes or less. When curing in hot air, as in an extruding operation, the air temperature may be as high as 300°C with exposure times as short as 10 to 60 seconds.

The cured fluorosilicone elastomer of the present disclosure exhibits improved retention of physical properties after exposure to fuels, oils, and aging at elevated temperatures.

In one embodiment, the cured fluorosilicone elastomer composition has a tensile strength of at least 7 MPa and an elongation of at least 200 %.

In one embodiment, the tensile strength of the cured fluorosilicone elastomer composition decreases by no more than 25 percent upon heat aging of the cured fluorosilicone elastomer for 7 days at 225°C.

In one embodiment, the tensile strength of the cured fluorosilicone elastomer composition decreases by no more than 15 percent upon exposure of the cured fluorosilicone elastomer to motor oil at 175°C for 7 days.

In one embodiment, the elongation of the cured fluorosilicone elastomer decreases by no more than 25 percent upon heat aging the cured fluorosilicone elastomer for 7 days at 225°C.

In one embodiment, the elongation of the cured fluorosilicone elastomer decreases by no more than 25 percent upon exposure of the cured fluorosilicone elastomer to motor oil at 175°C for 7 days.

The cured elastomer compositions are useful in a variety of applications such as to construct various articles of manufacture illustrated by but not limited to O-rings, gaskets, connectors, seals, liners, hoses, tubing, diaphragms, boots, valves, belts, blankets, coatings, rollers, molded goods, extruded sheet, caulks, and extruded articles, for use in applications areas which include but not are limited to transportation including automotive, watercraft, and aircraft; chemical and petroleum plants; electrical: wire and cable: food processing equipment; nuclear power plants; aerospace; medical applications; and the oil and gas drilling industry and other applications

The cured fluorosilicone elastomer produced following the process of this invention exhibits improved retention of physical properties after exposure to hot fuel, hot oil, and elevated temperatures. The fluorinated silicone elastomer is useful in applications such as hoses, gaskets, diaphragms, belts, coatings, and seals which are exposed to fuel, lubricating oils, and elevated temperatures such as those found in automobile engines.

The cured fluorinated silicone elastomers are particularly useful for o-rings, connectors, and to prepare hoses, especially turbo diesel engine hoses, for use in automotive and truck engines. Typically, turbocharger hoses are constructed of layers of silicone rubber (VMQ) and reinforcing fabric with an inner liner of a fluoroelastomer (FVMQ). The cured fluorosilicone elastomer compositions of the present disclosure are particularly useful materials for construction of inner liners of turbocharger hoses.

### Examples

These examples are intended to illustrate the invention to one of ordinary skill in the art and should not be interpreted as limiting the scope of the invention set forth in the claims. All measurements and experiments were conducted at 23°C, unless indicated otherwise.

| **Materials** | **Description** |
|---|---|
| LS-2840 | LS-2840 is a fluorosilicone elastomer base marketed by Dow Corning Corporation (Midland, MI) as Silastic® LS-2840 Fluorosilicone Rubber. |
| LS-2380U | LS-2380U is a fluorosilicone elastomer base marketed by Dow Corning Corporation (Midland, MI) as Silastic® LS-2380 U Fluorosilicone Rubber. |
| 4-4736 | 4-4736 is a silicone rubber marketed by Dow Corning Corporation (Midland, MI) as Silastic® 4-4736 Silicone Rubber. |
| HT-1 MB | HT-1 MB is a masterbatch of 50% cerium hydroxide in a dimethyl silicone rubber carrier and is marketed by Dow Corning Corporation (Midland, MI) as Silastic® HT-1 Modifier. |
| FeO3 MB | S 2400 Red 2 MB - a masterbatch of 50% iron oxide, as Bayferrox 130 BM Red Iron Oxide Pigment (Lanxess Corp.), in a dimethyl silicone rubber carrier and is marketed by Dow Corning Silastic ® S2400 Red 2 Colour Masterbatch. |
| Dicup 40C | Dicurnyl peroxide, 40% on CaCO3 GEO Specialty Chemicals |
| ZnO | Zinc oxide as Kaddox 911 (Horsehead Corp., Monaca PA 15061) |
| CB | Carbon black used as provided as SUPERJET® Carbon Black (LB-1011) from Elementis Pigments Inc., Fairview Heights, IL 62208. |
| CaC03 | Calcium carbonate (CaCO₃) as OMYA BLP® 3 (OMYA, Orgon France) |

### Formulations

All test formulations were based on a "baseline 1" formulation, in which the ratio of the comprising components was kept constant. Therefore in the test formulations any of the four evaluated additives, added alone or in any combination, were in addition to this baseline 1 formulation. The **baseline 1** formulation contained the following components:

| LS-2840 | 45parts |
|---|---|
| LS-2380U | 50 |
| 4-4736 | 5 |
| HT-1 MB | 1 |
| Dicup 40C | 1 |

This means in "baseline 1, 1.72% CB, 3.88% FeO₃ MB, 1.81% CaCO₃" the baseline 1 part of the formulation made up 92.59% of the total formulation (in the ratios given above) and the combined additives 7.41%.

### Compounding

All components were weighed using a 2 place laboratory balance to within 2% of there target weight. A laboratory two roll mixer was used to mix all formulations and the master batches that were prepared. The mill was unheated and the temperature of any material that was mixed was always kept below 50°C.

Master batches of the Kadox 911, LB-1011, and BLP 3 powders were first mixed, using a two roll mill (Reliable). This was done to assure a good dispersion of the powders prior to there introduction into the test formulations. Flurosilicone rubber (LS-2840) was used as the carrier for these master batches. Since it was a main component of all formulations, any LS-2840 that was introduced into a formulation as part of one or more of the master batches was accounted for, and effectively reduced the amount of neat LS-2840 that was needed.

To mix the master batches, the LS-2840 was banded on the faster roll and the additives added and allowed to mix into the rubber until incorporated. The material was cut off and was then rolled up and then fed endwise through the mill and allowed to band again. The material was then cut off, fed through, and allowed to band the same way 9 more times. All master batches were then placed inside sealed plastic storage bags to assure they could not absorb any moisture form the atmosphere.

All test formulations were also compounded using a laboratory two roll mill. The two main components of all the test formulations, LS-2840 and LS-2380U, were added first and allowed to band on the faster roll. All other components were then added, except the Dicup 40C peroxide, and hallowed to mix in until incorporated. The material was then cut from the roll, rolled up and fed back through the rolls to band again around the roll. The material was then cut off, fed through, and allowed to band the same way 4-6 more times.

The material was then fed back into the mill again and allowed to band. The peroxide was then added and allowed to mix until incorporated. The material was then cut from the roll, rolled up and fed back through the rolls to band again around the roll. The material was then cut off, fed through, and allowed to band the same way 9 more times. The material was then passed through the mill using a wider nip gap to obtain a continuos sheet of material approximately 0.100" thick more suitable for molding.

### Molding

The apparatus used for molding test slabs consisted of two 12" X 12" X 0.040" aluminum backer plates, both covered with a piece of PTFE fiber reinforced film, and a 12" X 12" steel chase with a cavity measuring 10" X 10" X 0.075". The material, which had previously been sheeted off the mill, was weighed to assure a proper fill weight for the chase. The material was first cold pressed and then placed in a press heated to 170C for a duration of 10 minutes at a pressure of 2,100 psi.

At the end of the 10 minutes the material would promptly be removed from the chase and allowed to cool on a cold steel bench. After cooling the identification number and molding conditions were written on the slabs and a light coating of talc dusted over the surface to prevent the slab from sticking to itself or other slabs during testing.

### Test methods

All materials were post cured for 4 hours al a temperature of 200°C in a circulating hot air oven before testing

### Hardness

Dow Corning Corporate Test Method 0099, based on ASTM D 2240

### Tensile strength, Elongation, Modulus

Dow Coming Corporate Test Method 0137A, based on ASTM D 412

### Tear strength

Dow Coming Corporate Test Method 1313, based on ASTM D 624

### Heat aging

Test specimens were prepared as for normal testing. They were then measured for thickness and hung by end in a pre-heated circulating hot air oven for the duration of the specified test period. Specimen were spaced far enough apart to assure good airflow around all sides of each specimen. Specimens were then removed, allowed to cool, and tested within 16-48 hrs according to the tensile and tear methods using the pre-aged thickness for all property calculations.

### Oil aging

The objective of this test was to determine the amount of physical degradation a test compound undergoes when submerged in heated motor oil for a specified period of time. Properties tested after aging included tensile strength, elongation, 30% modulus, 100% modulus, and hardness. These post-aging properties were measured using the same aforementioned test methods and were then compared to pre-aging properties to calculate a % change for each.

Equipment consisted of test tube block heaters, test tubes, and water cooled condensers to keep any oil vapors from escaping during testing. A total of 3 heating blocks were used, each with a 3 tube capacity, so 9 test compounds could be tested at any one time. A limited number of thermocouples (6) were employed to measure the actual oil temperature in each tube. This meant that for each heating block, the temperature for two of the three tubes could be taken.

Test slabs were prepared and 3 tensile test specimens cut out for each compound to be tested. The specimens were then marked/notched for identification and measured for thickness. Each specimen was also weighed for use in volume swell calculations. In all cases the oil used for testing was pre-aged for 16 hours at a temperature of 150C in a glass laboratory reaction vessel prior to testing.

Test tubes were filled with an appropriate amount of the unheated test oil (MA4. Total Oil Co). The 3 specimens for each compound were hung together on a short length of monofilament fishing line in such a way as to allow complete oil contact with the entire surface of each. The lines containing the specimens were then submerged in the oil filled tubes, leaving the tail of the line out of the tube so when the condenser was installed the specimens were securely suspended in the oil. Only one line was placed in each test tube to assure no cross contamination between different compounds was taking place during testing. The test assemblies were then placed into the heating blocks, which had been previously heated to the specified test temperature (175C). To monitor actual oil temperature during aging, thermocouples were threaded through the condensers and into the oil.

After a set period of time (7days) the specimens were removed, allowed to cool, and then the surface of each wiped clean of oil using a rag soaked in a small amount of acetone. The specimens were then weighed to determine the amount of swell and the hardness of each was also measured. Specimens were then tested as in a typical tensile test, using the pre-aged thickness.

### Heat Aging 7 days at 225°C

**Table 1**

| **7days/225C** | | | | | | | | | | | | | | | | |
|---|---|---|---|---|---|---|---|---|---|---|---|---|---|---|---|---|
| | **Initials** | | | | | | **Aged** | | | | | **Change** | | | | |
| | Tensile MPa | EB % | Mod 30 MPa | Mod 100 MPa | Duro ShA | Tear N/mm | Tensile MPa | EB % | Mod 30 MPa | Mod 100 MPa | Duro ShA | Tensile % | EB % | Mod 30 % | Mod 100 % | Duro pts |
| **Trial 1** | | | | | | | | | | | | | | | | |
| baseline 1, 1.94% CB, 4% FeO3 MB. 05% CaCO3 | 8.93 | 300 | 0.85 | 2.35 | 57 | 21.3 | 7.64 | 246 | 1.03 | 2.76 | 63 | -14 | -18 | 21 | 18 | 6 |
| baseline 1, 1.72% CB, 3.88% FeO3 MB, 1.81% | | | | | | | | | | | | | | | | |
| CaCO3 | 8.69 | 288 | 0.88 | 2.42 | 57 | 19.8 | 7.79 | 248 | 1.05 | 2.84 | 63 | -10 | -14 | 19 | 17 | 6 |
| baseline 1, 1.94% CB, 3.99% FeO3 MB | 8.86 | 293 | 0.88 | 2.50 | 57 | 22.0 | 7.75 | 241 | 1.07 | 2.91 | 63 | -13 | -18 | 22 | 17 | 5 |
| baseline 1, 1.82% CB, 4% FeO3 MB, 96% CaCO3 | 9.03 | 299 | 0.87 | 2.42 | 57 | 21.7 | 7.70 | 246 | 1.03 | 2.79 | 63 | -15 | -18 | 18 | 15 | 6 |
| baseline 1, 1.69% CB, 4% FeO3 MB, 2.08% CaCO3 | 8.95 | 302 | 0.92 | 2.51 | 57 | 20.6 | 7.74 | 243 | 1.09 | 2.98 | 63 | -13 | -19 | 18 | 19 | 6 |
| baseline 1 | 10.18 | 328 | 0.80 | 2.19 | 58 | 22.2 | 8.14 | 259 | 1.02 | 2.79 | 62 | -20 | -21 | 28 | 27 | 5 |

| **Trial 2** | | | | | | | | | | | | | | | | |
|---|---|---|---|---|---|---|---|---|---|---|---|---|---|---|---|---|
| baseline 1,5.33% CB, 1.33% Fe03 MB | 7.93 | 248 | 1.05 | 3.06 | 61 | 18.6 | 7.07 | 204 | 1.38 | 3.72 | 66 | -11 | -18 | 31 | 22 | 5 |
| baseline 1,4% CB, 4% Fe03 MB, 4% CaCO3 | 7.39 | 252 | 1.05 | 2.70 | 62 | 17.3 | 7.03 | 209 | 1.34 | 3.47 | 67 | -5 | -17 | 28 | 28 | 5 |
| baseline 1,4% ZnO, 4% Fe03 MB | 9.12 | 301 | 0.83 | 2.30 | 58 | 19.8 | 7.65 | 240 | 1.15 | 2.99 | 64 | -16 | -20 | 39 | 30 | 6 |
| baseline 1, 3.5 % ZnO, 3.5% CB, 1.5% CaCO3 | 7.87 | 253 | 0.99 | 2.73 | 60 | 21.2 | 6.86 | 200 | 1.26 | 3.30 | 65 | -13 | -21 | 27 | 21 | 5 |
| baseline 1.4% FeO3 MB, 4% CaCO3 | 8.75 | 293 | 0.88 | 2.34 | 58 | 20.4 | 7.73 | 245 | 1.10 | 3.04 | 63 | -12 | -16 | 25 | 30 | 5 |
| baseline 1, 4% ZnO, 2.67% FeO3 MB, 4% CaCO3 | 8.46 | 286 | 0.90 | 2.38 | 58 | 20.6 | 7.24 | 220 | 1.20 | 3.28 | 64 | -14 | -23 | 33 | 38 | 6 |
| baseline 1 | 9.63 | 304 | 0.84 | 2.33 | 57 | 21.5 | 8.29 | 259 | 1.08 | 2.87 | 62 | -14 | -15 | 29 | 23 | 5 |

### Heat Aging 7 days at 250°C

**Table 2**

| **7days/250C** | | | | | | | | | | | | | | | | |
|---|---|---|---|---|---|---|---|---|---|---|---|---|---|---|---|---|
| | **Initials** | | | | | | **Aged** | | | | | **Change** | | | | |
| | Tensile MPa | EB % | Mod 30 MPa | Mod 100 MPa | Duro ShA | Tear N/mm | Tensile MPa | EB % | Mod 30 MPa | Mod 100 MPa | Duro ShA | Tensile % | EB % | Mod 30 % | Mold 100 % | Duro pts |
| **Trial 1** | | | | | | | | | | | | | | | | |
| baseline 1, 1.94% CB, 4% FeO3 MB, .05% CaCO3 | 8.93 | 300 | 0.85 | 2.35 | 57 | 21.3 | 5.62 | 193 | 1.12 | 2.87 | 63 | -37 | -36 | 32 | 22 | 6.2 |
| baseline 1, 1.72% CB, 3.88% FeO3 MB, 1.81% | | | | | | | | | | | | | | | | |
| CaCO3 | 8.69 | 288 | 0.88 | 2.42 | 57 | 19.8 | 5.92 | 215 | 1.13 | 2.83 | 64 | -32 | -25 | 28 | 17 | 7.1 |
| baseline 1, 1.94% CB, 3.99% FeO3 MB | 8.86 | 293 | 0.88 | 2.50 | 57 | 22.0 | 5.39 | 185 | 1.13 | 2.92 | 64 | -39 | -37 | 28 | 17 | 6.6 |
| baseline 1, 1.82% CB, 4% Fe03 MB, .96% CaCO3 | 9.03 | 299 | 0.87 | 2.42 | 57 | 21.7 | 6.21 | 215 | 1.16 | 2.88 | 64 | -31 | -28 | 33 | 19 | 7.3 |
| baseline 1, 1.69% CB, 4% FeO3 MB, 2.08% CaCO3 | 8.95 | 302 | 0.92 | 2.51 | 57 | 20.6 | 6.02 | 202 | 1.20 | 3.12 | 65 | -33 | -33 | 30 | 24 | 7.3 |
| baseline 1 | 10.18 | 328 | 0.80 | 2.19 | 58 | 22.2 | 4.82 | 169 | 1.16 | 2.94 | 63 | -53 | -48 | 45 | 34 | 5.4 |

| **Trial 2** | | | | | | | | | | | | | | | | |
|---|---|---|---|---|---|---|---|---|---|---|---|---|---|---|---|---|
| baseline 1,5.33% CB, 1.33% Fe03 MB | 7.93 | 248 | 1.05 | 3.06 | 61 | 18.6 | 4.30 | 151 | 1.33 | 3.07 | 68 | -46 | -39 | 27 | 0 | 6.2 |
| baseline 1, 4% CB, 4% FeO3 MB, 4% CaCO3 | 7.39 | 252 | 1.05 | 2.70 | 62 | 17.3 | 4.74 | 172 | 1.34 | 3.11 | 66 | -36 | -32 | 28 | 15 | 4.0 |
| baseline 1, 4% ZnO, 4% FeO3 MB | 9.12 | 301 | 0.83 | 2.30 | 58 | 19.8 | 4.03 | 155 | 1.16 | 2.74 | 63 | -56 | -49 | 40 | 19 | 5.3 |
| baseline 1, 3.5 %ZnO, 3.5% CB, 1.5% CaCO3 | 7.87 | 253 | 0.99 | 2.73 | 60 | 21.2 | 4.83 | 167 | 1.32 | 3.17 | 67 | -39 | -34 | 33 | 16 | 7.1 |
| baseline 1, 4% FeO3 MB, 4% CaCO3 | 8.75 | 293 | 0.88 | 2.34 | 58 | 20.4 | 4.64 | 171 | 1.17 | 2.95 | 63 | -47 | -42 | 33 | 26 | 5.6 |
| baseline 1,4% ZnO, 2.67% FeO3 MB, 4% CaCO3 | 8.46 | 286 | 0.90 | 2.38 | 58 | 20.6 | 4.85 | 175 | 1.23 | 3.06 | 63 | -43 | -39 | 37 | 29 | 5.1 |
| baseline 1 | 9.63 | 304 | 0.84 | 2.33 | 57 | 21.5 | 4.56 | 165 | 1.11 | 2.83 | 63 | -53 | -46 | 32 | 21 | 5.9 |

### Heat Aging 42 days at 200°C

**Table 3**

| **42days/200C** | | | | | | | | | | | | | | | | |
|---|---|---|---|---|---|---|---|---|---|---|---|---|---|---|---|---|
| | **Initials** | | | | | | **Aged** | | | | | **Change** | | | | |
| | Tensile MPa | EB % | Mod 30 MPa | Mod 100 MPa | Duro ShA | Tear N/mm | Tensile MPa | EB % | Mod 30 MPa | Mod 100 MPa | Duro ShA | Tensile % | EB % | Mod 30 % | Mod 100 % | Duro pts |
| **Trial 1** | | | | | | | | | | | | | | | | |
| baseline 1, 1.94% CB, 4% FeO3 MB, .05% CaCO3 | 8.93 | 300 | 0.85 | 2.35 | 57 | 21.3 | 6.70 | 199 | 1.18 | 3.12 | 64 | -25 | -34 | 39 | 33 | 7 |
| baseline 1, 1.72% CB, 3.88% FeO3 MB, 1.81% CaCO3 | 8.69 | 288 | 0.88 | 2.42 | 57 | 19.8 | 6.60 | 204 | 1.17 | 3.04 | 65 | -24 | -29 | 33 | 25 | 9 |
| baseline 1, 1.94% CB, 3.99% Fe03 MB | 8.86 | 293 | 0.88 | 2.50 | 57 | 22.0 | 6.71 | 198 | 1.21 | 3.17 | 65 | -24 | -32 | 38 | 27 | 8 |
| baseline 1, 1.82% CB, 4% FeO3 MB, .96% CaCO3 | 9.03 | 299 | 0.87 | 2.42 | 57 | 21.7 | 6.73 | 197 | 1.22 | 3.27 | 66 | -25 | -34 | 40 | 35 | 9 |
| baseline 1, 1.69% CB, 4% FeO3 MB, 2.08% CaCO3 | 8.95 | 302 | 0.92 | 2.51 | 57 | 20.6 | 6.57 | 192 | 1.24 | 3.37 | 66 | -27 | -37 | 35 | 34 | 9 |
| baseline 1 | 10.18 | 328 | 0.80 | 2.19 | 58 | 22.2 | 6.16 | 182 | 1.20 | 3.21 | 64 | -40 | -44 | 50 | 46 | 7 |

| **Trail 2** | | | | | | | | | | | | | | | | |
|---|---|---|---|---|---|---|---|---|---|---|---|---|---|---|---|---|
| baseline 1, 5.33% CB, 1.33% FeO3 MB | 7.93 | 248 | 1.05 | 3.06 | 61 | 18.6 | 6.38 | 172 | 1.47 | 3.88 | 69 | -20 | -31 | 40 | 27 | 8 |
| baseline 1, 4% CB, 4% FeO3 MB, 4% CaCO3 | 7.39 | 252 | 1.05 | 2.70 | 62 | 17.3 | 6.02 | 168 | 1.45 | 3.73 | 69 | -19 | -33 | 38 | 38 | 7 |
| baseline 1, 4% ZnO, 4% FeO3 MB | 9.12 | 301 | 0.83 | 2.30 | 58 | 19.8 | 5.53 | 170 | 1.22 | 3.18 | 65 | -39 | -43 | 47 | 38 | 7 |
| baseline 1, 3.5 % ZnO, 3.5% CB, 1.5% CaCO3 | 7.87 | 253 | 0.99 | 2.73 | 60 | 21.2 | 6.17 | 167 | 1.46 | 3.74 | 69 | -22 | -34 | 47 | 37 | 9 |
| baseline 1,4% Fe03 MB, 4% CaCO3 | 8.75 | 293 | 0.88 | 2.34 | 58 | 20.4 | 5.82 | 181 | 1.21 | 3.25 | 64 | -33 | -38 | 38 | 39 | 6 |
| baseline 1, 4% ZnO, 2.67% Fe03 MB, 4% CaCO3 | 8.46 | 286 | 0.90 | 2.38 | 58 | 20.6 | 5.36 | 161 | 1.28 | 3.38 | 66 | -37 | -43 | 42 | 42 | 7 |
| baseline 1 | 9.63 | 304 | 0.84 | 2.33 | 57 | 21.5 | 5.84 | 182 | 1.17 | 3.08 | 63 | -39 | -40 | 39 | 32 | 7 |

### Oil Aging 7 days at 175°C

**Table 4**

| **7days/175C MA4 OIL** | | | | | | | | | | | | |
|---|---|---|---|---|---|---|---|---|---|---|---|---|
| | **Initials** | | | | **Aged** | | | | **Change** | | | |
| **Formulation** | Tensile MPa | EB % | Mod 30 MPa | Mod 100 MPa | Tensile MPa | EB % | Mod 30 MPa | Mod 100 MPa | Tensile % | EB % | Mod 30 % | Mod 100 % |
| | | | | | | | | | | | | |
| **Trial 1** | | | | | | | | | | | | |
| baseline 1, 1.94% CB, 4% FeO3 MB, .05% CaCO3 | 9.28 | 294 | 0.87 | 2.59 | 7.76 | 260 | 0.82 | 2.60 | -16 | -12 | -6 | 0 |
| baseline 1, 1.72% CB, 3.88% Fe03 MB, 1.81% CaCO3 | 9.10 | 286 | 0.87 | 2.58 | 7.03 | 246 | 0.88 | 2.53 | -23 | -14 | 1 | -2 |
| baseline 1, 1.94% CB, 3.99% FeO3 MB | 9.05 | 285 | 0.89 | 2.62 | 8.00 | 270 | 0.94 | 2.65 | -12 | -5 | 6 | 1 |
| baseline 1, 1.82% CB, 4% Fe03 MB, .96% CaCO3 | 9.37 | 292 | 0.92 | 2.66 | 7.51 | 258 | 0.93 | 2.58 | .20 | -12 | 1 | -3 |
| baseline 1, 1.69% CB, 4% FeO3 MB, 2.08% CaCO3 | 8.87 | 288 | 0.92 | 2.57 | 7.35 | 256 | 0.92 | 2.62 | -17 | -11 | 0 | 2 |
| baseline 1 | 10.74 | 325 | 0.80 | 2.37 | 7.61 | 253 | 0.74 | 2.48 | -29 | -22 | -8 | 5 |
| | | | | | | | | | | | | |

| **7days/175C MA4 OIL** | | | | | | | | | | | | |
|---|---|---|---|---|---|---|---|---|---|---|---|---|
| | **Initials** | | | | **Aged** | | | | **Change** | | | |
| **Formulation** | Tensile MPa | EB % | Mod 30 MPa | Mod . 100 MPa | Tensile MPa | EB % | Mod 30 MPa | Mod 100 MPa | Tensile % | EB % | Mod 30 % | Mod 100 % |
| | | | | | | | | | | | | |
| **Trial 2** | | | | | | | | | | | | |
| baseline 1, 5.33% CB, 1.33% FeO3 MB | 8.34 | 258 | 1.00 | 2.98 | 6.95 | 239 | 0.98 | 2.89 | -17 | -7 | -2 | -3 |
| baseline 1, 4% CB, 4% FeO3 MB, 4% CaCO3 | 8.18 | 268 | 1.03 | 2.89 | 6.48 | 239 | 0.96 | 2.72 | -21 | -11 | -7 | -6 |
| baseline 1, 4% ZnO, 4% FeO3 MB | 10.20 | 321 | 0.85 | 2.49 | 8.11 | 280 | 0.87 | 2.50 | -20 | -13 | 2 | 0 |
| baseline 1, 3.5 % ZnO, 3.5% CB, 1.5% CaCO3 | 8.60 | 263 | 0.96 | 2.94 | 7.29 | 239 | 1.01 | 2.85 | -15 | -9 | 5 | -3 |
| baseline 1, 4% Fe03 MB, 4% CaCO3 | 9.62 | 318 | 0.82 | 2.26 | 6.80 | 244 | 0.86 | 2.38 | -29 | -23 | 5 | 5 |
| baseline 1, 4% ZnO, 2.67% FeO3 MB, 4% CaCO3 | 9.54 | 305 | 0.87 | 2.50 | 6.97 | 239 | 0.89 | 2.52 | -27 | -21 | 2 | 1 |
| baseline 1 | 10.57 | 323 | 0.81 | 2.35 | 7.76 | 267 | 0.64 | 2.38 | -27 | -17 | -21 | 1 |

## Claims

1. A curable fluorosilicone elastomer composition comprising:
A) 70 - 95 weight % of a fluorosilicone elastomer base,
B) 1.5 - 40 weight % of a stabilizer comprising;
B¹) carbon black,
B²) calcium carbonate,
B³) iron oxide,
B⁴) optionally zinc oxide,
wherein the amount of parts by weight of components B¹, B², B³, and optionally B⁴ used in 100 parts by weight of the stabilizer varies from 2 to 50 parts, and
C) 0.1 - 3 wt% of a cure agent,
with the proviso the wt % of components A), B), and C) sum to 100 wt %.

2. The curable fluorosilicone elastomer composition of claim 1 **characterised in that** the fluorosilicone elastomer base comprises;
A¹) a perfluoroalkyl polydiorganopolysiloxane,
A²) a reinforcing filler,
A³) an optional non fluorinated polydiorganopolysiloxane
A⁴) cerium hydroxide or cerium hydrate, and
A⁵) an optional adhesion promoter.

3. The curable fluorosilicone elastomer composition of claim 1 or 2 **characterised in that** 100 weight parts of the stabilizer contains
10 to 40 parts B¹) carbon black,
10 to 40 parts B²) calcium carbonate, and
10 to 40 parts B³) iron oxide.

4. A curable fluorosilicone elastomer composition in accordance with any preceding claim comprising:
A¹) 50 to 90 weight % of the perfluoroalkyl polydiorganopolysiloxane,
A²) 2.5 to 47.5 weight % of the reinforcing filler,
A³) 0.1 to 5 weight % of the non fluorinated polydiorganopolysiloxane,
A⁴) 0.1 to 10 weight % cerium hydroxide or cerium hydrate, and
B¹) 1 to 6 weight % carbon black,
B²) 1 to 6 weight % calcium carbonate,
B³) 1 to 6 weight % iron oxide, and
C) 0.1 - 3 wt% of the cure agent,
with the proviso the wt % of all components sum to 100 wt %.

5. The curable fluorosilicone elastomer composition of claim 4 further comprising an adhesion promoter selected from a fluoro-modified organohydrogenpolysiloxane having the average formula
(Me₃SiO)(MeHSiO)ₓ(R^{f}CH₂CH₂(Me)SiO)_{y}(SiMe₃)
where x and y is from 1 to 200,
Me is methyl, and
R^{f} is a perfluoroalkyl group containing 1 to 10 carbon atoms.

6. A process for preparing a cured fluorosilicone elastomer comprising;
i) forming a mixture of the composition of any one of claims 1-5 to a configuration, and
ii) vulcanizing the configured mixture,
to produce the cured fluorosilicone elastomer.

7. The cured fluorosilicone elastomer prepared by the process of claim 6.

8. The cured fluorosilicone elastomer of claim 7 **characterised in that** the cured fluorosilicone elastomer has a tensile strength of at least 7 MPa and an elongation of at least 200 %.

9. The cured fluorosilicone elastomer of claim 7 or 8 **characterised in that** the tensile strength of the cured fluorosilicone elastomer decreases by no more than 25 percent upon heat aging of the cured fluorosilicone elastomer for 7 days at 225°C.

10. The cured fluorosilicone elastomer of any one of claims 7, 8 or 9 **characterised in that** the tensile strength of the cured fluorosilicone elastomer decreases by no more than 25 percent upon exposure of the cured fluorosilicone elastomer to motor oil at 175°C for 7 days.

11. The cured fluorosilicone elastomer of any one of claims 7, 8, 9 or 10 **characterised in that** the elongation of the cured fluorosilicone elastomer decreases by no more than 25 percent upon heat aging the cured fluorosilicone elastomer for 7 days at 225°C.

12. The cured fluorosilicone elastomer of any one of claims 7, 8, 9, 10 or 11 **characterised in that** the elongation of the cured fluorosilicone elastomer decreases by no more than 25 percent upon exposure of the cured fluorosilicone elastomer to motor oil at 175°C for 7 days.

13. An article of manufacture comprising the cured fluorosilicone elastomer of any one of claims 7 to 12.

14. The article of manufacture of claim 13 **characterised in that** said article is selected from O-rings, gaskets, seals, liners, hoses, tubing, diaphragms, boots, valves, belts, blankets, coatings, rollers, molded goods, extruded sheet, caulks, and extruded articles.

15. A hose construction comprising an inner liner containing the cured fluorosilicone elastomer of any one of claims 7 to 12.

16. A method for improving the heat stability or heat resistance of a cured fluorosilicone elastomer comprising:
I) mixing a stabilizer with a fluorosilicone elastomer base and a cure agent, said stabilizer comprising;
B¹) carbon black,
B²) calcium carbonate,
B³) iron oxide, and
B⁴) optionally zinc oxide,
II) vulcanizing the fluorosilicone elastomer base containing the stabilizer.

17. Use of a curable fluorosilicone elastomer composition in accordance with any one of claims 1 to 5 in the preparation of an article of manufacture.

## Patentansprüche

1. Eine härtbare Fluorsilikonelastomerzusammensetzung, die Folgendes beinhaltet:
A) 70-95 Gew.-% einer Fluorsilikonelastomerbasis,
B) 1,5-40 Gew.-% eines Stabilisierungsmittels, das Folgendes beinhaltet:
B¹) Ruß,
B²) Calciumcarbonat,
B³) Eisenoxid,
B⁴) optional Zinkoxid,
wobei die Menge der Gewichtsteile der Komponenten B¹, B², B³ und optional B⁴, die in 100 Gewichtsteilen des Stabilisierungsmittels verwendet wird, von 2 bis 50 Teile variiert, und
C) 0,1-3 Gew.-% eines Härtungsmittels,
mit der Maßgabe, dass das Gew.-% der Komponenten A), B) und C) insgesamt 100 Gew.-% ergibt.

2. Härtbare Fluorsilikonelastomerzusammensetzung gemäß Anspruch 1, **dadurch gekennzeichnet, dass** die Fluorsilikonelastomerbasis Folgendes beinhaltet:
A¹) ein Perfluoralkylpolydiorganopolysiloxan,
A²) einen Verstärkerfüllstoff,
A³) ein optionales nicht fluoriertes Polydiorganopolysiloxan,
A⁴) Cerhydroxid oder Cerhydrat und
A⁵) einen optionalen Haftvermittler.

3. Härtbare Fluorsilikonelastomerzusammensetzung gemäß Anspruch 1 oder 2, **dadurch gekennzeichnet, dass** 100 Gewichtsteile des Stabilisierungsmittels Folgendes enthalten:
10 bis 40 Teile B¹) Ruß,
10 bis 40 Teile B²) Calciumcarbonat und
10 bis 40 Teile B³) Eisenoxid.

4. Härtbare Fluorsilikonelastomerzusammensetzung gemäß einem der vorhergehenden Ansprüche, die Folgendes beinhaltet:
A¹) 50 bis 90 Gew.-% des Perfluoralkylpolydiorganopolysiloxans,
A²) 2,5 bis 47,5 Gew.-% des Verstärkerfüllstoffs,
A³) 0,1 bis 5 Gew.-% des nicht fluorierten Polydiorganopolysiloxans,
A⁴) 0,1 bis 10 Gew.-% Cerhydroxid oder Cerhydrat und
B¹) 1 bis 6 Gew.-% Ruß,
B²) 1 bis 6 Gew.-% Calciumcarbonat,
B³) 1 bis 6 Gew.-% Eisenoxid und
C) 0,1-3 Gew.-% des Härtungsmittels,
mit der Maßgabe, dass das Gew.-% aller Komponenten insgesamt 100 Gew.-% ergibt.

5. Härtbare Fluorsilikonelastomerzusammensetzung gemäß Anspruch 4, die ferner einen Haftvermittler beinhaltet, ausgewählt aus einem fluormodifizierten Organowasserstoffpolysiloxan mit der Durchschnittsformel
(Me₃SiO)(MeHSiO)ₓ(R^{f}CH₂CH₂(Me)SiO)_{y}(SiMe₃),
wobei x und y von 1 bis 200 betragen,
Me Methyl ist und
R^{f} eine Perfluoralkylgruppe ist, die 1 bis 10 Kohlenstoffatome enthält.

6. Ein Verfahren zum Zubereiten eines gehärteten Fluorsilikonelastomers, das Folgendes beinhaltet:
i) Bilden einer Mischung der Zusammensetzung gemäß einem der Ansprüche 1-5 in eine Konfiguration und
ii) Vulkanisieren der konfigurierten Mischung,
um das gehärtete Fluorsilikonelastomer zu produzieren.

7. Gehärtetes Fluorsilikonelastomer, das gemäß dem Verfahren aus Anspruch 6 zubereitet wird.

8. Gehärtetes Fluorsilikonelastomer gemäß Anspruch 7, **dadurch gekennzeichnet, dass** das gehärtete Fluorsilikonelastomer eine Zugfestigkeit von mindestens 7 MPa und eine Verlängerung von mindestens 200 % aufweist.

9. Gehärtetes Fluorsilikonelastomer gemäß Anspruch 7 oder 8, **dadurch gekennzeichnet, dass** die Zugfestigkeit des gehärteten Fluorsilikonelastomers bei Wärmealterung des gehärteten Fluorsilikonelastomers 7 Tage lang bei 225 °C um nicht mehr als 25 Prozent abnimmt.

10. Gehärtetes Fluorsilikonelastomer gemäß einem der Ansprüche 7, 8 oder 9, **dadurch gekennzeichnet, dass** die Zugfestigkeit des gehärteten Fluorsilikonelastomers bei Aussetzung des gehärteten Fluorsilikonelastomers gegenüber Motoröl 7 Tage lang bei 175 °C um nicht mehr als 25 Prozent abnimmt.

11. Gehärtetes Fluorsilikonelastomer gemäß einem der Ansprüche 7, 8, 9 oder 10, **dadurch gekennzeichnet, dass** die Verlängerung des gehärteten Fluorsilikonelastomers bei Wärmealterung des gehärteten Fluorsilikonelastomers 7 Tage lang bei 225 °C um nicht mehr als 25 Prozent abnimmt.

12. Gehärtetes Fluorsilikonelastomer gemäß einem der Ansprüche 7, 8, 9, 10 oder 11, **dadurch gekennzeichnet, dass** die Verlängerung des gehärteten Fluorsilikonelastomers bei Aussetzung des gehärteten Fluorsilikonelastomers gegenüber Motoröl 7 Tage lang bei 175 °C um nicht mehr als 25 Prozent abnimmt.

13. Ein Manufakturerzeugnis, welches das gehärtete Fluorsilikonelastomer gemäß einem der Ansprüche 7 bis 12 beinhaltet.

14. Manufakturerzeugnis gemäß Anspruch 13, **dadurch gekennzeichnet, dass** das Erzeugnis aus Folgendem ausgewählt ist: O-Ringen, Dichtungen, Abdichtungen, Auskleidungen, Schläuchen, Rohren, Membranen, Schutzmanschetten, Ventilen, Riemen, Decken, Beschichtungen, Rollen, geformten Artikeln, extrudierter Folie, Dichtungsmaterialien und extrudierten Erzeugnissen.

15. Eine Schlauchkonstruktion, die eine innere Auskleidung beinhaltet, welche das gehärtete Fluorsilikonelastomer gemäß einem der Ansprüche 7 bis 12 enthält.

16. Ein Verfahren zum Verbessern der Wärmestabilität oder Wärmebeständigkeit eines gehärteten Fluorsilikonelastomers, das Folgendes beinhaltet:
I) Mischen eines Stabilisierungsmittels mit einer Fluorsilikonelastomerbasis und einem Härtungsmittel, wobei das Stabilisierungsmittel Folgendes beinhaltet:
B¹) Ruß,
B²) Calciumcarbonat,
B³) Eisenoxid und
B⁴) optional Zinkoxid,
II) Vulkanisieren der Fluorsilikonelastomerbasis, welche das Stabilisierungsmittel enthält.

17. Eine Verwendung einer härtbaren Fluorsilikonelastomerzusammensetzung gemäß einem der Ansprüche 1 bis 5 bei der Zubereitung eines Manufakturerzeugnisses.

## Revendications

1. Une composition élastomère de fluorosilicone durcissable comprenant :
A) de 70 à 95 % en poids d'une base élastomère de fluorosilicone,
B) de 1,5 à 40 % en poids d'un stabilisant comprenant ;
B¹) du noir de carbone,
B²) du carbonate de calcium,
B³) de l'oxyde de fer,
B⁴) facultativement de l'oxyde de zinc,
dans laquelle la quantité de parties en poids des composants B¹, B², B³ et facultativement B⁴ utilisée dans 100 parties en poids du stabilisant varie de 2 à 50 parties, et
C) de 0,1 à 3 % en poids d'un agent de durcissement,
à condition que la somme des % en poids des composants A), B) et C) fasse 100 % en poids.

2. La composition élastomère de fluorosilicone durcissable de la revendication 1 **caractérisée en ce que** la base élastomère de fluorosilicone comprend ;
A¹) un perfluoroalkyl polydiorganopolysiloxane,
A²) une charge de renforcement,
A³) un polydiorganopolysiloxane non fluoré facultatif
A⁴) de l'oxyde de cérium hydraté ou hydrate de cérium, et
A⁵) un promoteur d'adhésion facultatif.

3. La composition élastomère de fluorosilicone durcissable de la revendication 1 ou la revendication 2 **caractérisée en ce que** 100 parties en poids du stabilisant contiennent
de 10 à 40 parties de noir de carbone B¹),
de 10 à 40 parties de carbonate de calcium B²), et
de 10 à 40 parties d'oxyde de fer B³).

4. Une composition élastomère de fluorosilicone durcissable conformément à n'importe quelle revendication précédente comprenant :
A¹) de 50 à 90 % en poids du perfluoroalkyl polydiorganopolysiloxane,
A²) de 2,5 à 47,5 % en poids de la charge de renforcement,
A³) de 0,1 à 5 % en poids du polydiorganopolysiloxane non fluoré,
A⁴) de 0,1 à 10 % en poids d'oxyde de cérium hydraté ou hydrate de cérium, et
B¹) de 1 à 6 % en poids de noir de carbone,
B²) de 1 à 6 % en poids de carbonate de calcium,
B³) de 1 à 6 % en poids d'oxyde de fer, et
C) de 0,1 à 3 % en poids de l'agent de durcissement,
à condition que la somme des % en poids de tous les composants fasse 100 % en poids.

5. La composition élastomère de fluorosilicone durcissable de la revendication 4 comprenant en outre un promoteur d'adhésion sélectionné dans un organohydrogénopolysiloxane modifié au fluor ayant la formule moyenne
(Me₃SiO)(MeHSiO)ₓ(R^{f}CH₂CH₂(Me)SiO)_{y}(SiMe₃)
où x et y vont de 1 à 200,
Me est le méthyle, et
R^{f} est un groupe perfluoroalkyle contenant de 1 à 10 atomes de carbone.

6. Un procédé destiné à préparer un élastomère de fluorosilicone durci comprenant ;
i) former un mélange de la composition d'une quelconque des revendications 1 à 5 suivant une configuration, et
ii) vulcaniser le mélange configuré,
pour produire l'élastomère de fluorosilicone durci.

7. L'élastomère de fluorosilicone durci préparé par le procédé de la revendication 6.

8. L'élastomère de fluorosilicone durci de la revendication 7 **caractérisé en ce que** l'élastomère de fluorosilicone durci a une résistance à la traction d'au moins 7 MPa et un allongement d'au moins 200 %.

9. L'élastomère de fluorosilicone durci de la revendication 7 ou la revendication 8 **caractérisé en ce que** la résistance à la traction de l'élastomère de fluorosilicone durci diminue de pas plus de 25 pour cent lors du vieillissement thermique de l'élastomère de fluorosilicone durci pendant 7 jours à 225 °C.

10. L'élastomère de fluorosilicone durci d'une quelconque des revendications 7, 8 ou 9 **caractérisé en ce que** la résistance à la traction de l'élastomère de fluorosilicone durci diminue de pas plus de 25 pour cent lors de l'exposition de l'élastomère de fluorosilicone durci à une huile moteur à 175 °C pendant 7 jours.

11. L'élastomère de fluorosilicone durci d'une quelconque des revendications 7, 8, 9 ou 10 **caractérisé en ce que** l'allongement de l'élastomère de fluorosilicone durci diminue de pas plus de 25 pour cent lors du vieillissement thermique de l'élastomère de fluorosilicone durci pendant 7 jours à 225 °C.

12. L'élastomère de fluorosilicone durci d'une quelconque des revendications 7, 8, 9, 10 ou 11 **caractérisé en ce que** l'allongement de l'élastomère de fluorosilicone durci diminue de pas plus de 25 pour cent lors de l'exposition de l'élastomère de fluorosilicone durci à une huile moteur à 175 °C pendant 7 jours.

13. Un article de fabrication comprenant l'élastomère de fluorosilicone durci d'une quelconque des revendications 7 à 12.

14. L'article de fabrication de la revendication 13 **caractérisé en ce que** ledit article est sélectionné parmi des joints toriques, des joints statiques, des joints d'étanchéité, des chemises, des tuyaux, de la tuyauterie, des diaphragmes, des gaines, des soupapes, des courroies, des couvertures, des revêtements, des rouleaux, des objets moulés, de la feuille extrudée, des produits de calfeutrage et des articles extrudés.

15. Une construction de tuyau comprenant une chemise interne contenant l'élastomère de fluorosilicone durci d'une quelconque des revendications 7 à 12.

16. Une méthode destinée à améliorer la stabilité à la chaleur ou la résistance à la chaleur d'un élastomère de fluorosilicone durci comprenant :
I) mélanger un stabilisant avec une base élastomère de fluorosilicone et un agent de durcissement, ledit stabilisant comprenant ;
B¹) du noir de carbone,
B²) du carbonate de calcium,
B³) de l'oxyde de fer, et
B⁴) facultativement de l'oxyde de zinc,
II) vulcaniser la base élastomère de fluorosilicone contenant le stabilisant.

17. Utilisation d'une composition élastomère de fluorosilicone durcissable conformément à une quelconque des revendications 1 à 5 dans la préparation d'un article de fabrication.
